# EUROPEAN PATENT APPLICATION

(11) **EP 4 769 589 A1**
(43) Date of publication of application: **01.07.2026**
(21) Application number: 24891762.7
(22) Date of filing: 13.11.2024
(51) Int. Cl.: H01M 10/04, H01M 50/691, H01M 50/183, H01M 50/105

(54) **APPARATUS AND METHOD FOR MANUFACTURING BATTERY CELL**

(30) Priority: 13.11.2023 KR 20230156414
(71) Applicant: LG Energy Solution, Ltd., Seoul 07335 (KR)
(72) Inventor: YOO, Duk Hyun, Daejeon 34122 (KR)
(74) Representative: Goddar, Heinz J.
(86) International application number: PCT/KR2024/017910
(87) International publication number: WO 2025/105816

(57) **Abstract**

A battery cell manufacturing apparatus according to an embodiment of the present disclosure may manufacture a battery cell including an electrode assembly, and a pouch-type battery case having an accommodation portion accommodating the electrode assembly and a terrace portion located around the accommodation portion. The battery cell manufacturing apparatus may include an alignment unit configured to align the battery cell; a squeezing unit configured to push an electrolyte solution remaining in the terrace portion toward the accommodation portion; and a sealing unit configured to form a main sealing portion having a first gap with the accommodation portion in the terrace portion after the squeezing unit pushes the electrolyte solution. The squeezing unit may be configured to push the electrolyte solution further inwards than a region of the terrace portion which will become the main sealing portion.

## Description

### TECHNICAL FIELD

### CROSS-REFERENCE TO RELATED APPLICATIONS

The present application claims priority to Korean Patent Application No. 10-2023-0156414 filed on November 13, 2023 in the Republic of Korea, the disclosure of which is incorporated herein by reference.

### TECHNICAL FIELD

The present disclosure relates to an apparatus and method for manufacturing a pouch-type battery cell.

### BACKGROUND ART

Secondary batteries may be classified according to the structure of an assembly of positive electrode/separator/negative electrode. Representative examples include a jellyroll (wound) electrode assembly in which long sheet-shaped positive electrodes and long sheet-shaped negative electrodes are wound with separators interposed between them, a stack-type electrode assembly in which a positive electrode and a negative electrode are cut to a predetermined size into a plurality of positive electrode units and a plurality of negative electrode units which in turn, are stacked in a sequential order with separators interposed between them, and a stack/folding-type electrode assembly in which a bi-cell or a mono-cell including positive electrodes and negative electrodes of a predetermined size stacked with separators interposed between them is wound with a separation film.

Secondary batteries may be classified into cylindrical batteries, prismatic batteries, pouch-type batteries according to the shape of a battery case. Among them, the pouch-type battery forms an external shape using a pouch-type battery case of a multilayer film including a metal layer (a foil) and a synthetic resin layer coated on the upper surface and the lower surface of the metal layer, so it is possible to significantly reduce the weight of the battery compared to the cylindrical or prismatic battery using a metal can, thereby achieving the lightweight battery and changing into different shapes.

The pouch-type battery case generally includes a first case in which the electrode assembly is received, and a second case that seals the top of a lower outer packaging material. When the electrode assembly is received in an accommodation portion of the first case, a terrace portion around the accommodation portion of the first case and a corresponding terrace portion of the second case are placed in close contact with each other, a part of an area of contact is bonded by heat, an electrolyte solution is injected and the remaining area is sealed, then the secondary battery is pre-assembled.

In an activation process, for smooth conduction of electric current, the secondary battery is mounted on a predetermined jig and charging/discharging is performed in the necessary conditions for activation. The secondary battery essentially undergoes the activation process for activation of a positive electrode active material and stable Solid Electrolyte Interface (SEI) formation at the negative electrode in the first cycle due to its characteristics. In the activation process, a large amount of gas is produced inside the secondary battery. Subsequently, the produced gas is removed through an open or cut outlet, and the gas venting site is sealed again by heat bonding. The gas venting process of the secondary battery is generally referred to as a degassing process, and after the degassing process, sealing is performed to complete the secondary battery.

During gas venting in the degassing process, some of the electrolyte solution may remain in the terrace portion, and sealability of the terrace portion may be significantly reduced by the electrolyte solution remaining in the terrace portion. It results in low quality of a sealing portion formed at the terrace portion, and insulation decline.

### SUMMARY

### TECHNICAL PROBLEM

The present disclosure is directed to providing an apparatus and method for manufacturing a battery cell with improved quality of a sealing portion.

The present disclosure is further directed to providing an apparatus and method for manufacturing a battery cell for removing an electrolyte solution remaining in a region which will become a sealing portion with reliability.

### TECHNICAL SOLUTION

A battery cell manufacturing apparatus according to an embodiment of the present disclosure may manufacture a battery cell including an electrode assembly, and a pouch-type battery case having an accommodation portion accommodating the electrode assembly and a terrace portion located around the accommodation portion. The battery cell manufacturing apparatus may include an alignment unit configured to align the battery cell; a squeezing unit configured to push an electrolyte solution remaining in the terrace portion toward the accommodation portion; and a sealing unit configured to form a main sealing portion having a first gap with the accommodation portion in the terrace portion after the squeezing unit pushes the electrolyte solution. The squeezing unit may be configured to push the electrolyte solution further inwards than a region of the terrace portion which will become the main sealing portion.

The alignment unit may include a nest on which the battery cell is mounted; and a pusher configured to press the battery cell against the nest to fix the battery cell.

The nest may have a step to prevent the battery cell from being pushed by the squeezing unit.

The squeezing unit may include a press roll configured to move toward the accommodation portion while applying pressure to the terrace portion, and a radius of the press roll may be smaller than the first gap.

The press roll may include a main body; and a contact portion disposed at an outer periphery of the main body and having higher friction coefficient than the main body.

The contact portion may include an elastically deformable material.

The squeezing unit may include a support portion located at a side of the terrace portion; and a press element located at an opposite side of the terrace portion, and moving toward the accommodation portion while applying pressure to the terrace portion toward the support portion. An end portion of the press element may be rounded.

The press element may have a shape with a smaller cross-sectional area toward the end portion.

A radius of curvature of the end portion of the press element may be smaller than the first gap.

The press element may have a contact portion having lower friction coefficient than the press element at the end portion.

The battery cell manufacturing apparatus may further include a pre-sealing unit configured to seal the terrace portion to form a pre-sealing portion having a second gap with the accommodation portion before the squeezing unit pushes the electrolyte solution. The second gap may be larger than the first gap.

The squeezing unit may move from an initial position to a final position further inwards than the region which will become the main sealing portion.

The initial position may be a position on the pre-sealing portion.

The squeezing unit may be adjacent to or contact the accommodation portion when the squeezing unit is in the final position.

A battery cell manufacturing method according to an embodiment of the present disclosure may manufacture a battery cell including an electrode assembly, and a pouch-type battery case having an accommodation portion accommodating the electrode assembly and a terrace portion located around the accommodation portion. The battery cell manufacturing method may include the steps of aligning the battery cell; pushing, by a squeezing unit, an electrolyte solution remaining in the terrace portion toward the accommodation portion; and forming a main sealing portion having a first gap with the accommodation portion in the terrace portion. In the step of pushing the electrolyte solution, the squeezing unit may push the electrolyte solution further inwards than a region of the terrace portion which will become the main sealing portion.

The battery cell manufacturing method may further include, before the step of pushing the electrolyte solution, forming a pre-sealing portion having a second gap with the accommodation portion in the terrace portion. The second gap may be larger than the first gap.

In the step of pushing the electrolyte solution, the squeezing unit may move from an initial position to a final position further inwards than the region which will become the main sealing portion.

The initial position may be a position on the pre-sealing portion.

The squeezing unit may be adjacent to or contact the accommodation portion when the squeezing unit is in the final position.

### ADVANTAGEOUS EFFECTS

According to the exemplary embodiment of the present disclosure, the squeezing unit may push the electrolyte solution further inwards than the region of the main sealing portion which will become the terrace portion. Accordingly, it may be possible to remove the electrolyte solution remaining in the region with reliability, and prevent a reduction in sealability of the main sealing portion that will be formed afterwards.

Additionally, it may be possible to prevent microcracks that may occur when the polymer layer in the main sealing portion is not evenly bonded, and its consequential insulation decline.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is an assembly diagram of a battery cell.
FIG. 2 is a plan view of a battery cell.
FIG. 3 is a schematic diagram showing a press roll of a battery cell manufacturing apparatus according to an embodiment of the present disclosure.
FIG. 4 is an enlarged view of the press roll shown in FIG. 3 and its neighborhood.
FIG. 5 is a schematic diagram showing a sealing unit according to an embodiment of the present disclosure.
FIG. 6 is a schematic diagram showing a support portion and a press element of a battery cell manufacturing apparatus according to another embodiment of the present disclosure.
FIG. 7 is an enlarged view of the press element shown in FIG. 6 and its neighborhood.
FIG. 8 is a flowchart of a battery cell manufacturing method according to still another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

In the drawings, each element of a secondary battery according to an embodiment of the present disclosure is schematically shown, and the size of the element or the thickness of the line may be somewhat exaggerated for convenience of understanding.

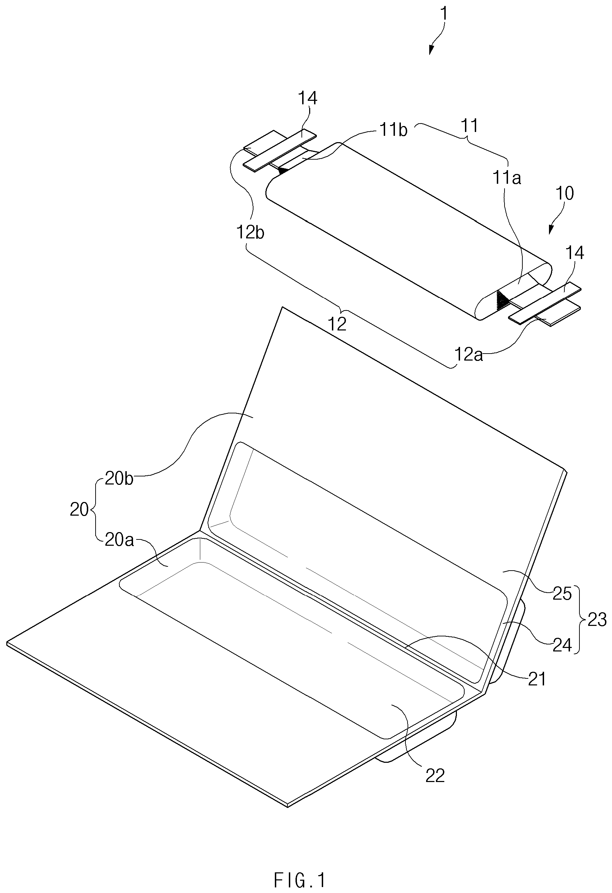

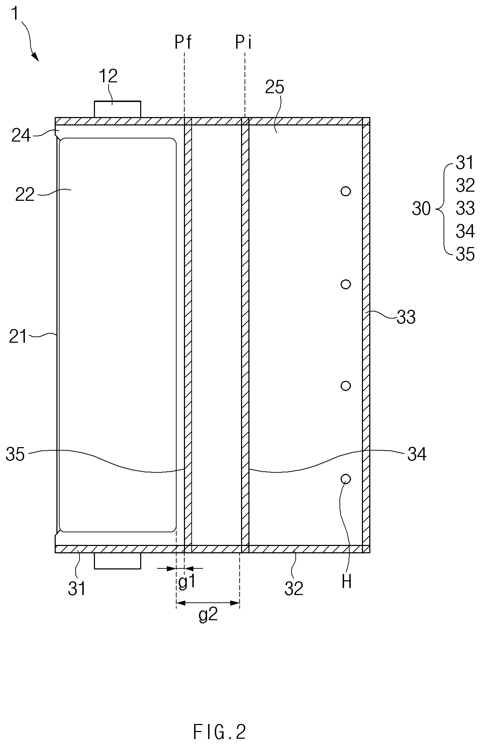

FIG. 1 is an assembly diagram of a battery cell, and FIG. 2 is a plan view of the battery cell.

The battery cell 1 described herein may be manufactured by a manufacturing apparatus and/or a manufacturing method according to the present disclosure. The battery cell 1 may be in a state at a specific time in the manufacturing process, or in a finally completed state, and may be appropriately interpreted according to the context or needs.

The battery cell 1 may include an electrode assembly 10 and a pouch-type battery case 20 (hereinafter, 'battery case').

The electrode assembly 10 may be formed by stacking a positive electrode and a negative electrode in an alternating manner with a separator interposed between them. That is, the electrode assembly 10 may include the plurality of electrodes, and the separator interposed between the plurality of electrodes to insulate the plurality of electrodes. The electrode assembly 10 may be accommodated in the battery case 20, to be more specific, an accommodation portion 22 as described below together with an electrolyte solution.

The electrode assembly 10 may come in different types, for example, a stack type, a jellyroll type, or a stack and folding type, and the electrode assembly 10 is not limited to a particular type.

The electrode assembly 10 may include an electrode tab 11. The electrode tab 11 may be connected to each of the positive electrode and the negative electrode of the electrode assembly 10, and protruded outward from the electrode assembly 10 to act as a path of movement of electrons between the inside and outside of the electrode assembly 10.

The electrode tab 11 may be formed by tailoring an uncoated portion of an electrode current collector or by connecting a conductor to the uncoated portion by ultrasonic welding.

The electrode tab 11 may include a positive tab 11a connected to the positive electrode, and a negative tab 11b connected to the negative electrode. The positive tab 11a and the negative tab 11b may be protruded in different directions of the electrode assembly 10, but they are not limited thereto and may be protruded toward various directions, for example, protruded from one side in the same direction in parallel to each other.

An electrode lead 12 may be connected to the electrode tab 11 of the electrode assembly 10 to provide electricity to the outside of the battery cell 1. Additionally, a part of the electrode lead 12 may be covered by an insulator 14. The insulator 14 may be sealed with a first case 20a and a second case 20b. Accordingly, the insulator 14 may insulate the electrode lead 12 from the battery case 20 and maintain the sealing of the battery case 20. The insulator 14 may generally include an insulating tape that is easy to get attached to the electrode lead 12 and has a relatively small thickness, but is not limited thereto, and may include various types of insulators that can insulate the electrode lead 12.

One end of the electrode lead 12 may be connected to the electrode tab 11 and the other end may be protruded outward from the battery case 20. The electrode lead 12 may include a positive lead 12a connected to the positive tab 11a, and a negative lead 12b connected to the negative tab 11b.

The electrode lead 12 may electrically connect the electrode assembly 10 to the outside. Additionally, the positive tab 11a and the negative tab 11b may be protruded toward different directions, and the positive lead 12a and the negative lead 12b may be also extended toward different directions.

The battery case 20 may accommodate the electrode assembly 10 inside and may be formed by forming a laminated sheet. For example, when the laminated sheet having flexibility is drawn using a die and a punch, a part of the laminated sheet may be stretched to form the accommodation portion 22 having a pocket-shaped accommodation space, then the battery case 20 may be manufactured.

However, the accommodation portion 22 is not limited to a particular configuration, and may be formed by a different way from the way shown in the drawing. For example, the laminated sheet may be folded in a preset shape to form the accommodation portion 22.

Hereinafter, the battery case 20 may be in a state at a specific time in the manufacturing process, or in a finally completed state. That is, the description of the battery case 20 may encompass the sealed or unfolded state as shown in FIG. 2, and may be appropriately interpreted according to the context or needs.

The battery case 20 accommodating the electrode assembly 10 such that a part of the electrode lead 12 is exposed, may be sealed.

The battery case 20 may include the first case 20a and the second case 20b sealed with the electrode assembly 10 positioned between them.

Preferably, the accommodation portion 22 may be formed in at least one of the first case 20a and the second case 20b. Additionally, the surrounding area of the accommodation portion 22 may form a terrace portion 23. That is, the battery case 20 may include the accommodation portion 22 and the terrace portion 23 located at the outer side of the accommodation portion 22.

The first case 20a and the second case 20b may be connected to each other by a folding portion 21. However, the first case 20a and the second case 20b are not limited thereto, and may be separately manufactured.

The accommodation portion 22 may define the accommodation space for accommodating the electrode assembly 10. The accommodation portion 22 may have a pocket shape.

The following description is made based on the accommodation portion 22 formed in each of the first case 20a and the second case 20b. Those skilled in the art will easily understand that the accommodation portion 22 may be only formed in any one of the pair of cases 20a, 20b.

The accommodation portions 22 of the pair of cases 20a, 20b may accommodate the electrode assembly 10 together when they are placed facing each other. That is, the accommodation portions 22 of the pair of cases 20a, 20b may define the accommodation space in which the electrode assembly 10 is accommodated when they are placed facing each other. In this case, compared to the accommodation portion 22 formed in any one of the pair of cases 20a, 20b, the electrode assembly 20 may accommodate the electrode assembly 10 having larger thickness and higher capacity.

The first case 20a and the second case 20b may be connected to the folding portion 21. When the first case 20a and the second case 20b are unfolded, a part of the folding portion 21 may be located between the accommodation portion 22 of the first case 20a and the accommodation portion 22 of the second case 20b, and the other part of the folding portion 21 may be located between the terrace portion 23 of the first case 20a and the terrace portion 23 of the second case 20b.

When the folding portion 21 is folded, the first case 20a and the second case 20b may face each other. The folding portion 21 may be extended parallel to the length direction of the electrode assembly 10, but is not limited thereto.

Each case 20a, 20b may include the terrace portion 23 located around the accommodation portion 22. More specifically, the terrace portion 23 may include a first terrace portion 24 where the electrode lead 12 is protruded, and a second terrace portion 25 connected to the first terrace portion 24.

As an example, as shown in FIG. 1, the first terrace portion 24 may include a pair of first terrace portions 24 located at two sides of the accommodation portion 22 in the length direction, and the second terrace portion 25 may connect the pair of first terrace portions 24 and be located at one side of the accommodation portion 22 in the width direction. In this case, the first terrace portion 24 may be extended in the width direction of the accommodation portion 22, and the second terrace portion 25 may be extended in the length direction of the accommodation portion 22.

As another example, when the first case 20a and the second case 20b are separate elements that are not connected to the folding portion 21, the first terrace portion 24 may include the pair of first terrace portions 24 at the two sides of the accommodation portion 22 in the length direction, and the second terrace portion 25 may include a pair of second terrace portions 25 connecting the pair of first terrace portions 24 and located at the two sides of the accommodation portion 22 in the width direction.

When the first case 20a and the second case 20b are connected by the folding portion 21, any one of the first terrace portion 24 and the second terrace portion 25 may be located at a side of the accommodation portion 22 opposite the folding portion 21.

As an example, as shown in FIG. 1, the second terrace portion 25 may be located at the side of the accommodation portion 22 opposite the folding portion 21. In this case, the pair of first terrace portions 24 may connect the folding portion 21 to the second terrace portion 25. That is, the pair of electrode leads 12 may be extended in opposite directions and each protruded outwards through each of the first terrace portions 24.

As another example, the first terrace portion 25 may be located at the side of the accommodation portion 22 opposite the folding portion 21. That is, the pair of electrode leads 12 may be extended parallel to each other in a direction away from the folding portion 21 and protruded outwards through the first terrace portion 24. In this case, the second terrace portion 25 may include a pair of second terrace portions 25, and may connect the folding portion 21 to the first terrace portion 24.

The extension direction and location of the first terrace portion 24 and the second terrace portion 25 is not limited thereto and may be formed otherwise according to needs.

When the folding portion 21 is folded, the terrace portions 23 of the first case 20a and the second case 20b may contact each other. In this instance, the insulator 14 of the electrode assembly 10 may be located between the terrace portions 23 of the pair of cases 20a, 20b. For example, the insulator 14 may be located between the first terrace portions 24 of the pair of cases 20a, 20b.

The battery case 20 may have a sealing portion 30 where the first case 20a and the second case 20b are sealed together. The sealing portion 30 may be located around the accommodation portion 22. More specifically, the terrace portions 23 of the first case 20a and the second case 20b may be sealed together to form the sealing portion 30. The sealing portion 30 may be formed by bonding polymer layers (for example, polypropylene) that form the innermost layers of the first case 20a and the second case 20b.

More specifically, referring to FIG. 2, the sealing portion 30 may include a first sealing portion 31, a second sealing portion 32, a third sealing portion 33, a fourth sealing portion 34 and a fifth sealing portion 35.

The first sealing portion 31 may be formed by sealing the first terrace portion 24. The first sealing portion 31 may be extended in a direction. The first sealing portion 31 may be extended along the length direction of the first terrace portion 24 (for example, the width direction of the accommodation portion).

A part of the first sealing portion 31 may be formed by sealing the first terrace portion 24 and the insulator 14. That is, the electrode lead 12 connected to the electrode assembly 10 may be protruded outwards through the first sealing portion 31.

The second sealing portion 32 may be formed by sealing the second terrace portion 25. The second sealing portion 32 may be connected to the first sealing portion 31. The second sealing portion 32 may be located on approximately the same line as the first sealing portion 31. In the same way as the first sealing portion 31, the second sealing portion 32 may be extended in a direction. The second sealing portion 32 may be extended along the width direction of the second terrace portion 25 (for example, the width direction of the accommodation portion).

The first sealing portion 31 and the second sealing portion 32 may be formed by a single sealing unit (not shown) at the same time. When the first sealing portion 31 and the second sealing portion 32 are formed at the two sides of the battery case, an open portion may be formed at an end portion of the battery case 20. For example, the battery case 20 has a shape similar to an envelope. The electrolyte solution may be injected into the battery case 20 through the open portion. Subsequently, the open portion may be sealed to form the third sealing portion 33.

The third sealing portion 33 may be formed by sealing the second terrace portion 25. The third sealing portion 33 may be formed at the outer end portion of the second terrace portion 25. The third sealing portion 33 may be connected to the second sealing portion 32. The third sealing portion 33 may be extended in a different direction from the second sealing portion 32. That is, the third sealing portion 33 may be extended in the other direction. The third sealing portion 33 may be extended along the length direction of the second terrace portion 25 (for example, the length direction of the accommodation portion).

A part of the second terrace portion 25 located at the inner position than the third sealing portion 33, i.e., an unsealed part may be defined as a gas pocket portion. The gas pocket portion may be surrounded by the second sealing portion 32 and the third sealing portion 33 and communicate with the accommodation portion 22.

As described above, the third sealing portion 33 may be formed after the electrolyte solution is injected into the battery case 20. When an activation process is performed on the electrode assembly 10 after the third sealing portion 33 is formed, gas may be produced and collected in the gas pocket portion.

Subsequently, a degassing hole H may be drilled in the gas pocket portion, and a degassing process may be performed to release the gas to atmosphere through the hole. More specifically, in the degassing process, in a state that the first sealing portion 31, the second sealing portion 32 and the third sealing portion 33 are formed, the battery cell 1 may be placed in a low-pressure chamber (not shown). The degassing hole H may be drilled in the gas pocket portion of the battery cell 1 located in the low-pressure chamber. Accordingly, the gas in the battery cell 1 may be released to atmosphere through the degassing hole H by a pressure difference between the inside and outside of the battery cell 1.

After sufficient gas venting, the fourth sealing portion 34 may be formed. The fourth sealing portion 34 may be formed by sealing the second terrace portion 25. The fourth sealing portion 34 may be formed such that it runs through between the degassing hole H and the accommodation portion 22. The fourth sealing portion 34 may be connected to the second sealing portion 32. The fourth sealing portion 34 may be formed parallel to the third sealing portion 33. The fourth sealing portion 34 may be formed with a sufficient gap between the accommodation portion 22 and the fourth sealing portion 34.

The fourth sealing portion 34 may be formed in a state that the surrounding of the battery cell 1 is maintained at low pressure. Accordingly, the fourth sealing portion 34 may prevent moisture from entering the accommodation portion 22 through the degassing hole H.

After the fourth sealing portion 34 is formed, the low pressure of the low-pressure chamber may be turned off and the battery cell 1 may be transferred out of the low-pressure chamber. Additionally, a part of the second terrace portion 25 located at the outer side of the fourth sealing portion 34, i.e., where the degassing hole H is drilled and the third sealing portion 33 may be cut off and removed.

Subsequently, the fifth sealing portion 35 may be formed. The fifth sealing portion 35 may be formed by sealing the second terrace portion 25. The fifth sealing portion 35 may be formed closer to the accommodation portion 22 than the fourth sealing portion 34. More specifically, the fifth sealing portion 35 may form a first gap g1 with the accommodation portion 22, the fourth sealing portion 34 may form a second gap g2 with the accommodation portion 22, and the second gap g2 may be larger than the first gap g1.

The fifth sealing portion 35 may be connected to the first sealing portion 31. The fifth sealing portion 35 may be extended parallel to the fourth sealing portion 34. That is, in the same way as the fourth sealing portion 34, the fifth sealing portion 35 may be extended in the other direction. The fifth sealing portion 35 may extended along the length direction of the second terrace portion 25 (for example, the length direction of the accommodation portion).

After the fifth sealing portion 35 is formed, the part of the second terrace portion 25 located at the outer side of the fifth sealing portion 35 may be cut off and removed. More specifically, a trimming process may be performed to cut off and remove the part of the second terrace portion 25 along a cutting line adjacent to or passing through the fifth sealing portion 35. The cutting line may be parallel to the fifth sealing portion 35. Accordingly, the completed battery cell 1 may have a compact size and improved energy density.

By the trimming process, the second sealing portion 32 and the fourth sealing portion 34 may be also cut off together. Accordingly, the first sealing portion 31 and the fifth sealing portion 35 connected to each other may remain in the completed secondary battery 1.

Hereinafter, the fourth sealing portion 34 formed before the fifth sealing portion 35 is formed, is referred to as a pre-sealing portion, and the fifth sealing portion 35 is referred to as a main sealing portion.

Meanwhile, in the degassing process, while the gas in the battery cell 1 is released to atmosphere through the degassing hole H, some of the electrolyte solution in the accommodation portion may come out of the degassing hole together. Accordingly, even after the degassing process is completed, some of the electrolyte solution may remain in the terrace portion 23, to be more specific, the second terrace portion 25, resulting in low sealing quality of the main sealing portion 35. To solve this problem, it is necessary to remove the electrolyte solution remaining in the second terrace portion 25 before the main sealing portion 35 is formed.

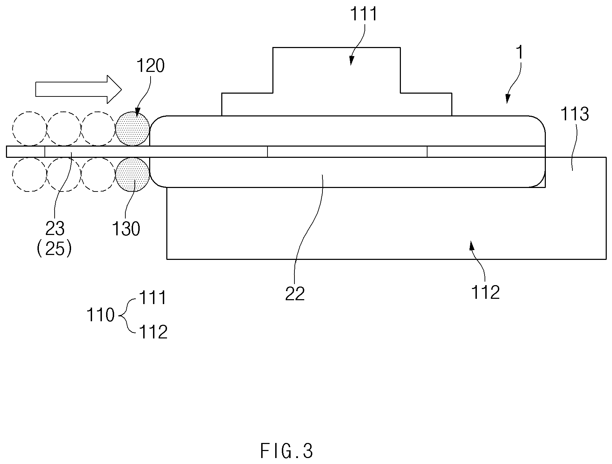

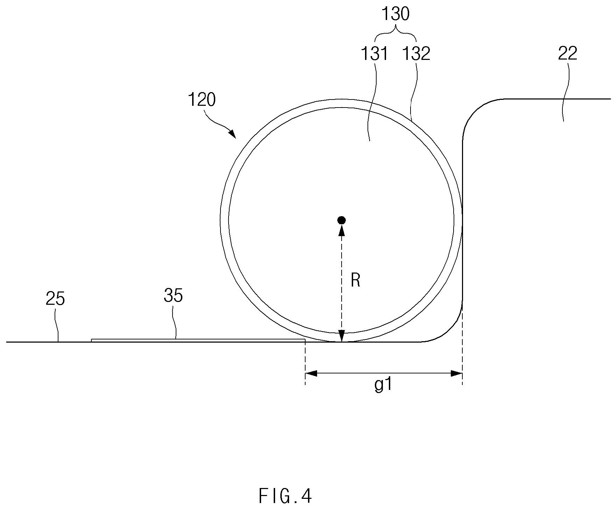

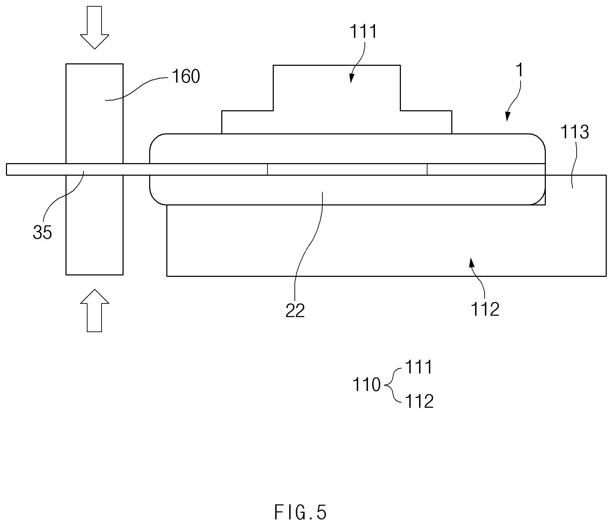

FIG. 3 is a schematic diagram showing a press roll of a battery cell manufacturing apparatus according to an embodiment of the present disclosure, FIG. 4 is an enlarged view of the press roll shown in FIG. 3 and its neighborhood, and FIG. 5 is a schematic diagram showing a sealing unit according to an embodiment of the present disclosure.

The battery cell manufacturing apparatus according to an embodiment of the present disclosure may include an alignment unit 110, a squeezing unit 120 and a sealing unit 160.

The alignment unit 110 may be configured to align the battery cell 1.

The alignment unit 110 may align the battery cell 1 having finished the degassing process. The alignment unit 110 may align the battery cell 1 having the pre-sealing portion 34. In this instance, the battery cell 1 may be in a state before the main sealing portion 35 is formed. Additionally, the part of the second terrace portion 25 of the battery cell 1 located at the outer position than the pre-sealing portion 34 has been cut off.

The alignment unit 110 may include a nest 112 on which the battery cell 1 is mounted, and a pusher 111 to press the battery cell 1 against the nest 112 to fix the battery cell 1. The pusher 111 and the nest 112 may face each other in the thickness direction of the battery cell 1 with the battery cell 1 positioned between them.

The nest 112 may have a step 113 to prevent the battery cell 1 from being pushed by the squeezing unit 120 as described below. That is, when the battery cell 1 is mounted on the nest 112, the step 113 may be located at the folding portion 21 of the battery cell 1.

The squeezing unit 120 may be configured to push the electrolyte solution remaining in the terrace portion 23 toward the accommodation portion 22. More specifically, the squeezing unit 120 may be configured to push the electrolyte solution remaining in the second terrace portion 25 of the battery cell 1 aligned by the alignment unit 110 toward the accommodation portion 22.

The squeezing unit 120 may move while applying pressure to the terrace portion 23. As the squeezing unit 120 moves, the electrolyte solution remaining in the terrace portion 23 may be pushed toward the accommodation portion 22, and removed from inside the terrace portion 23.

The squeezing unit 120 may be configured to push the electrolyte solution further inwards than a region of the terrace portion 23 which will become the main sealing portion 35. In FIG. 4, the region which will become the main sealing portion 35 is indicated by the reference numeral '35' that is the same as the main sealing portion 35. This is provided for convenience of description. Actually, the squeezing unit 120 may apply pressure to the terrace portion 23 before the main sealing portion 35 is formed in the terrace portion 23.

The squeezing unit 120 may move from an initial position Pi to a final position Pf further inwards than the region which will become the main sealing portion 35 (see FIG. 2). The initial position Pi and the final position Pf may refer to a point of contact between the squeezing unit 120 and the terrace portion 23.

The initial position Pi may be an outer position than the main sealing portion 35. For example, the initial position Pi may be a position on the pre-sealing portion 34.

When the squeezing unit 120 is in the final position Pf, the squeezing unit 120 may be adjacent to or contact the accommodation portion 22.

The final position Pf may be located at the inner position of the region which will become the main sealing portion 35. That is, the squeezing unit 120 may push the electrolyte solution further inwards than the region of the terrace portion 23 which will become the main sealing portion 35. Accordingly, it may be possible to remove the electrolyte solution remaining in the region with reliability, and prevent the reduction in sealability of the main sealing portion 35 that will be formed afterwards.

In the case of an embodiment of the present disclosure, the squeezing unit 120 may include a press roll 130 moving toward the accommodation portion 22 while applying pressure to the terrace portion 23. The press roll 130 may be extended in a direction parallel to the main sealing portion 35 that will be formed afterwards, and rotate around the rotation axis parallel to the main sealing portion 35.

The press roll 130 may include a pair of press rolls 130 arranged facing each other with the terrace portion 23 positioned between them.

The distance between the pair of press rolls 130 may be adjusted, and the distance from the accommodation portion 22 may be adjusted. More specifically, on the basis of FIG. 3, each of the pair of press rolls 130 may move in the vertical direction and the horizontal direction.

The pair of press rolls 130 may start to contact the terrace portion 23 at the initial position Pi. More specifically, the pair of press rolls 130 may move in a direction of getting closer to each other to start to contact the pre-sealing portion 34 of the terrace portion 23, and apply pressure to the terrace portion 23.

The pair of press rolls 130 may move toward the accommodation portion 22 while maintaining the pressure on the terrace portion 23. Accordingly, the electrolyte solution remaining in the terrace portion 23 may be removed when it is pushed inwards by the pair of press rolls 130.

The pair of press rolls 130 may be spaced apart from the terrace portion 23 at the final position Pf. More specifically, the pair of press rolls 130 in contact with a region further inwards than the region which will become the main sealing portion 35 may move in a direction away from each other and be spaced apart from the terrace portion 23.

The one-time movement of the press roll 130 from the initial position Pi to the final position Pf may be defined as a single squeezing operation. The press roll 130 may remove the electrolyte solution remaining in the terrace portion 23 more thoroughly by repeating the squeezing operation multiple times.

The press roll 130 may include a main body 131 and a contact portion 132 disposed at the outer circumference of the main body 131. The contact portion 132 may define the outer circumference of the press roll 130 and contact the terrace portion 23. The contact portion 132 may have higher friction coefficient than the main body 131. Additionally, the contact portion 132 may include an elastically deformable material. For example, the contact portion 132 may include a material having the buffering effect and high friction coefficient, such as sponge, rubber, silicone or urethane. Accordingly, because a slip does not occur between the contact portion 132 and the terrace portion 23, the press roll 130 may move while applying pressure to the terrace portion 23 effectively.

Meanwhile, as described above, the squeezing unit 120 may be configured to push the electrolyte solution further inwards than the region of the terrace portion 23 which will become the main sealing portion 35. To this end, a radius R of the press roll 130 may be smaller than the gap between the region and the accommodation portion 22. Because the main sealing portion 35 that will be formed afterwards forms the first gap with the accommodation portion 22, the gap may be equal to the first gap g1.

That is, the radius R of the press roll 130 may be smaller than the first gap g1. Accordingly, when the press roll 130 moves to the final position Pf, as shown in FIG. 4, the press roll 130 may apply pressure to a region further inwards than the region which will become the main sealing portion 35. In the case where the radius R of the press roll 130 is equal to or larger than the first gap g1, it is impossible to apply pressure to a region further inwards than the region even though the press roll 130 moves until it contacts the accommodation portion 22.

When the press roll 130 is in the final position Pf, the press roll 130 may be adjacent to or contact the accommodation portion 22. The press roll 130 may push the electrolyte solution further inwards than the region of the terrace portion 23 which will become the main sealing portion 35. Accordingly, it may be possible to remove the electrolyte solution remaining in the region with reliability, and prevent the reduction in sealability of the main sealing portion 35 that will be formed afterwards.

Meanwhile, referring to FIG. 5, after the squeezing unit 120 pushes the electrolyte solution, the sealing unit 160 may be configured to form the main sealing portion 35 having the first gap g1 with the accommodation portion 22 at the terrace portion 23. The sealing unit 160 may form the main sealing portion 35 by applying heat and pressure to the terrace portion 23, to be more specific, the second terrace portion 25.

The detailed configuration of the sealing unit 160 is not limited. For example, the sealing unit 160 may include a pair of sealing tools extended parallel to the main sealing portion 35 to be formed. The pair of sealing tools may be arranged facing each other with the terrace portion 23 positioned between them, and the region of the terrace portion 23 may be pressed between the pair of sealing tools to form the main sealing portion 35.

The battery cell manufacturing apparatus may further include a pre-sealing unit (not shown). Before the squeezing unit 120 pushes the electrolyte solution, the pre-sealing unit may be configured to seal the terrace portion 23 to form the pre-sealing portion 34 having the second gap g2 with the accommodation portion 22. As described above, the second gap g2 may be larger than the first gap g1 between the main sealing portion 35 that will be formed afterwards and the accommodation portion 22.

The pre-sealing unit may form the pre-sealing portion 34 by applying heat and pressure to the terrace portion 23, in particular, the second terrace portion 25. As described above, the pre-sealing unit may form the pre-sealing portion 34 in a state that the battery cell 1 is located in the low-pressure chamber.

Those skilled in the art will easily understand the configuration of the pre-sealing unit from the configuration of the sealing unit 160 shown in FIG. 5.

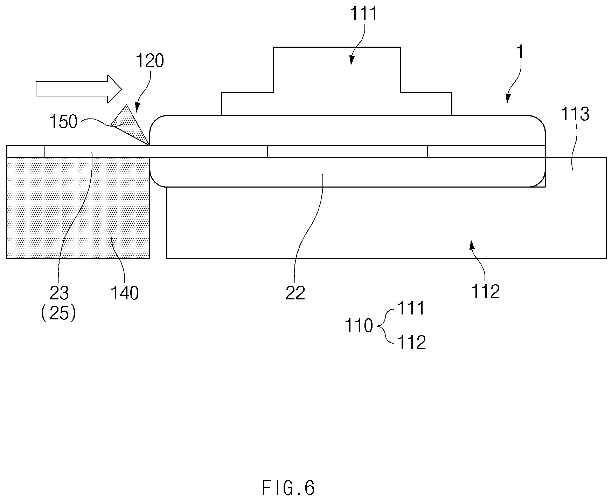

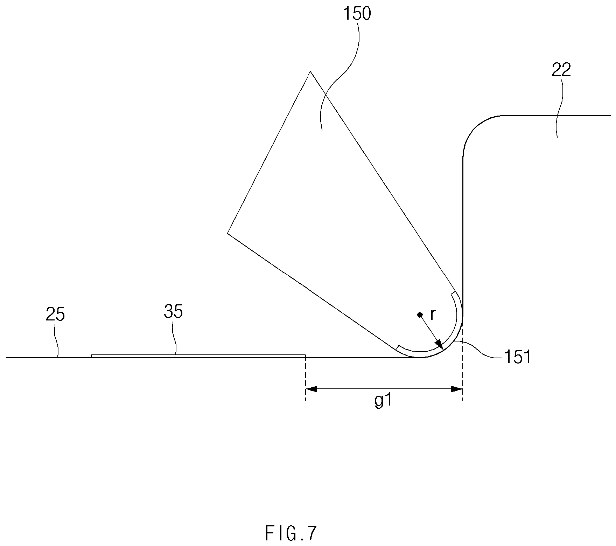

FIG. 6 is a schematic diagram showing a support portion and a press element of the battery cell manufacturing apparatus according to another embodiment of the present disclosure, and FIG. 7 is an enlarged view of the press element shown in FIG. 6 and its neighborhood.

Another embodiment of the present disclosure is the same as the above-described embodiment except the configuration of the squeezing unit 120, and the overlapping description is incorporated.

In the case of another embodiment of the present disclosure, the squeezing unit 120 may include the support portion 140 located at one side of the terrace portion 23, and the press element 150 located at the other side of the terrace portion 23 and configured to apply pressure to the terrace portion 23 toward the support portion 140 and move toward the accommodation portion 22.

The support portion 140 may be located below the terrace portion 23, in particular, the second terrace portion 25. The support portion 140 may include a flat support surface that contacts a lower surface of the terrace portion 23.

The press element 150 may be located on the terrace portion 23, in particular, the second terrace portion 25. The press element 150 may contact the upper surface of the terrace portion 23, and apply pressure to the terrace portion 23 toward the support portion 140.

The end portion of the press element 150 may contact the terrace portion 23. To prevent the terrace portion 23 from getting damaged by the press element 150, the end portion of the press element 150 may be rounded.

The press element 150 may be formed with a large width in a direction parallel to the main sealing portion 35 that will be formed afterwards, and extended toward the terrace portion 23. That is, the end portion of the press element 150 may face the terrace portion 23. For example, the press element 150 may be a press knife.

The press element 150 may have a shape with a smaller cross-sectional area toward the end portion. Accordingly, the radius of curvature R of the end portion of the press element 150 may be reduced.

The distance of the press element 150 from each of the support portion 140 and the accommodation portion 22 may be adjusted. More specifically, on the basis of FIG. 6, the press element 150 may move in each of the vertical direction and the horizontal direction.

The press element 150 may start to contact the terrace portion 23 at the initial position Pi. More specifically, the press element 150 may move to start to contact the pre-sealing portion 34 of the terrace portion 23, and apply pressure to the terrace portion 23.

The press element 150 may move toward the accommodation portion 22 while maintaining the pressure on the terrace portion 23. Accordingly, the electrolyte solution remaining in the terrace portion 23 may be removed when it is pushed inwards by the press element 150.

The press element 150 may be spaced apart from the terrace portion 23 at the final position Pf. More specifically, the press element 150 in contact with a region further inwards than the region which will become the main sealing portion 35 may be spaced apart from the terrace portion 23.

The movement of the press element 150 from the initial position Pi to the final position Pf may be defined as a single squeezing operation. The press element 150 may remove the electrolyte solution remaining in the terrace portion 23 more thoroughly by repeating the squeezing operation multiple times.

The press element 150 may have a contact portion 151 having lower friction coefficient than the press element 150 at the end portion. The contact portion 151 may define the end portion of the press element 150 and contact the terrace portion 23. To prevent the terrace portion 23 from getting damaged by the contact portion 151, the contact portion 151 may be rounded.

The contact portion 151 may have low friction coefficient. For example, the contact portion 151 may include a material having low friction coefficient such as polyetheretherketone (PEEK) or Teflon. Accordingly, the press element 150 may slidably move on the terrace portion 23 with ease, thereby preventing the terrace portion 23 from getting damaged.

Meanwhile, as described above, the squeezing unit 120 may be configured to push the electrolyte solution further inwards than the region of the terrace portion 23 which will become the main sealing portion 35. To this end, the radius of curvature R of the end portion of the press element 150 may be smaller than the gap between the region and the accommodation portion 22. The main sealing portion 35 that will be formed afterwards may form the first gap with the accommodation portion 22, and the gap may be equal to the first gap g1.

That is, the radius of curvature R of the end portion of the press element 150 may be smaller than the first gap g1. Accordingly, when the press element 150 moves to the final position Pf, as shown in FIG. 7, the press element 150 may apply pressure to a region further inwards than the region which will become the main sealing portion 35.

In the same way as FIG. 4, in FIG. 7, the region which will become the main sealing portion 35 is indicated by the reference numeral '35' that is the same as the main sealing portion 35. This is for convenience of description. Actually, the press element 150 may apply pressure to the terrace portion 23 before the main sealing portion 35 is formed in the terrace portion 23.

When the press element 150 is in the final position Pf, the press element 150 may be adjacent to or contact the accommodation portion 22. The press element 150 may push the electrolyte solution further inwards than the region of the terrace portion 23 which will become the main sealing portion 35. Accordingly, it may be possible to remove the electrolyte solution remaining in the region with reliability, and prevent the reduction in sealability of the main sealing portion 35 that will be formed afterwards.

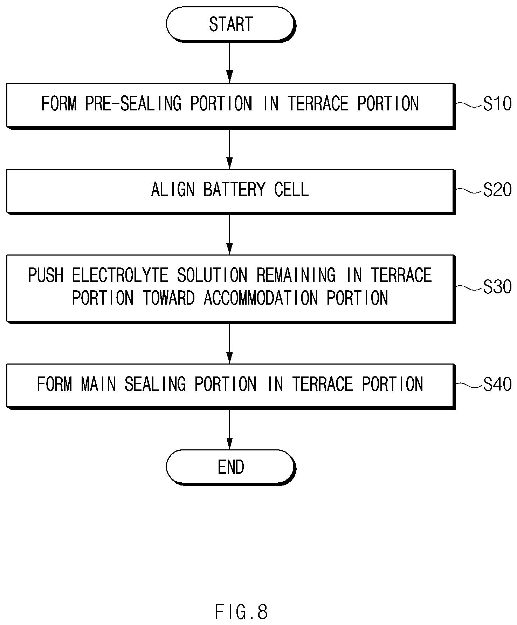

FIG. 8 is a flowchart of a battery cell manufacturing method according to still another embodiment of the present disclosure.

Hereinafter, the battery cell manufacturing method performed by the above-described battery cell manufacturing apparatus will be described as another embodiment of the present disclosure.

The battery cell manufacturing method according to still another embodiment of the present disclosure may include the step S20 of aligning the battery cell 1, the step S30 of pushing, by the squeezing unit 120, the electrolyte solution remaining in the terrace portion 23 toward the accommodation portion 22, and the step S40 of forming the main sealing portion 35 having the first gap g1 with the accommodation portion 22 at the terrace portion 23. The battery cell manufacturing method may further include the step S10 of forming the pre-sealing portion 34 having the second gap g2 with the accommodation portion 22 at the terrace portion 23.

The step S10 of forming the pre-sealing portion 34 may be performed before the step S30 of pushing the electrolyte solution, and more specifically, may be performed before the step S20 of aligning the battery cell 1.

In the step S10 of forming the pre-sealing portion 34, the pre-sealing unit may form the pre-sealing portion 34 in the terrace portion 23 of the battery cell 1, in particular, the second terrace portion 25, inside the low-pressure chamber.

The pre-sealing portion 34 may be formed such that it runs through between the degassing hole H and the accommodation portion 22. The pre-sealing portion 34 may be formed with a sufficient gap, i.e., the second gap g2 with the accommodation portion 22.

The pre-sealing portion 34 may be formed in a state that the surrounding of the battery cell 1 is maintained at low pressure, thereby preventing moisture from entering the accommodation portion 22 through the degassing hole H.

Subsequently, the battery cell 1 may be transferred out of the low-pressure chamber after the pre-sealing portion 34 is formed. Additionally, the part of the second terrace portion 25 located at the outer side of the pre-sealing portion 34, i.e., where the degassing hole H is drilled, may be cut off and removed.

In the step S20 of aligning the battery cell 1, the alignment unit 110 may align the battery cell 1. More specifically, the step S20 of aligning the battery cell 1 may include a process of mounting the battery cell 1 on the nest 112, and a process of pressing, by the pusher 111, the battery cell 1 against the nest 112 to fix the battery cell 1.

In the step S30 of pushing the electrolyte solution, the squeezing unit 120 may push the electrolyte solution remaining in the terrace portion 23 of the aligned battery cell 1 toward the accommodation portion 22. More specifically, the squeezing unit 120 may push the electrolyte solution further inwards than the region of the terrace portion 23 which will become the main sealing portion 35.

To this end, the squeezing unit 120 may move while applying pressure to the terrace portion 23. The squeezing unit 120 may move from the initial position Pi to the final position Pf further inwards than the region which will become the main sealing portion 35. The initial position Pi may be an outer position than the main sealing portion 35. For example, the initial position Pi may be a position on the pre-sealing portion 34.

When the squeezing unit 120 is in the final position Pf, the squeezing unit 120 may be adjacent to or contact the accommodation portion 22.

In the step S40 of forming the main sealing portion 35, after the squeezing unit 120 pushes the electrolyte solution, the sealing unit 160 may form the main sealing portion 35 having the first gap g1 with the accommodation portion 22 at the terrace portion 23.

By the step S30 of pushing the electrolyte solution, the electrolyte solution remaining in the terrace portion 23 may be removed with reliability, and in the step S40 of forming the main sealing portion 35, the reduction in sealability of the main sealing portion 35 may be prevented.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [List of Reference Numerals]

| | | | | |
|---|---|---|---|---|
| [0163] | 1: | Battery cell | 10: | Electrode assembly |
| [0164] | 20: | Pouch-type battery case | 20a: | First case |
| [0165] | 20b: | Second case | 21: | Folding portion |
| [0166] | 22: | Accommodation portion | 23: | Terrace portion |
| [0167] | 24: | First terrace portion | 25: | Second terrace portion |
| [0168] | 30: | Sealing portion | 31: | First sealing portion |
| [0169] | 32: | Second sealing portion | 33: | Third sealing portion |
| [0170] | 34: | Fourth sealing portion, Pre-sealing portion | | |
| [0171] | 35: | Fifth sealing portion, Main sealing portion | | |
| [0172] | 110: | Alignment unit | 111: | Pusher |
| [0173] | 112: | Nest | 113: | Step |
| [0174] | 120: | Squeezing unit | 130: | Press roll |
| [0175] | 131: | Main body | 132: | Contact portion |
| [0176] | 140: | Support portion | 150: | Press element |
| [0177] | 151: | Contact portion | 160: | Sealing unit |

## Claims

1. An apparatus for manufacturing a battery cell including an electrode assembly, and a pouch-type battery case having an accommodation portion accommodating the electrode assembly and a terrace portion located around the accommodation portion, the apparatus for manufacturing the battery cell comprising:
an alignment unit configured to align the battery cell;
a squeezing unit configured to push an electrolyte solution remaining in the terrace portion toward the accommodation portion; and
a sealing unit configured to form a main sealing portion having a first gap with the accommodation portion in the terrace portion after the squeezing unit pushes the electrolyte solution,
wherein the squeezing unit is configured to push the electrolyte solution further inwards than a region of the terrace portion which will become the main sealing portion.

2. The apparatus for manufacturing the battery cell according to claim 1,
wherein the alignment unit includes:
a nest on which the battery cell is mounted; and
a pusher configured to press the battery cell against the nest to fix the battery cell.

3. The apparatus for manufacturing the battery cell according to claim 2,
wherein the nest has a step to prevent the battery cell from being pushed by the squeezing unit.

4. The apparatus for manufacturing the battery cell according to claim 1,
wherein the squeezing unit includes:
a press roll configured to move toward the accommodation portion while applying pressure to the terrace portion, and
wherein a radius of the press roll is smaller than the first gap.

5. The apparatus for manufacturing the battery cell according to claim 4,
wherein the press roll includes:
a main body; and
a contact portion disposed at an outer periphery of the main body and having higher friction coefficient than the main body.

6. The apparatus for manufacturing the battery cell according to claim 5,
wherein the contact portion includes an elastically deformable material.

7. The apparatus for manufacturing the battery cell according to claim 1,
wherein the squeezing unit includes:
a support portion located at a side of the terrace portion; and
a press element located at an opposite side of the terrace portion, and moving toward the accommodation portion while applying pressure to the terrace portion toward the support portion, and
wherein an end portion of the press element is rounded.

8. The apparatus for manufacturing the battery cell according to claim 7,
wherein the press element has a shape with a smaller cross-sectional area toward the end portion.

9. The apparatus for manufacturing the battery cell according to claim 7,
wherein a radius of curvature of the end portion of the press element is smaller than the first gap.

10. The apparatus for manufacturing the battery cell according to claim 7,
wherein the press element has a contact portion having lower friction coefficient than the press element at the end portion.

11. The apparatus for manufacturing the battery cell according to claim 1, further comprising:
a pre-sealing unit configured to seal the terrace portion to form a pre-sealing portion having a second gap with the accommodation portion before the squeezing unit pushes the electrolyte solution, and
wherein the second gap is larger than the first gap.

12. The apparatus for manufacturing the battery cell according to claim 11,
wherein the squeezing unit moves from an initial position to a final position further inwards than the region which will become the main sealing portion.

13. The apparatus for manufacturing the battery cell according to claim 12,
wherein the initial position is a position on the pre-sealing portion.

14. The apparatus for manufacturing the battery cell according to claim 12,
wherein the squeezing unit is adjacent to or contacts the accommodation portion when the squeezing unit is in the final position.

15. A method for manufacturing a battery cell including an electrode assembly, and a pouch-type battery case having an accommodation portion accommodating the electrode assembly and a terrace portion located around the accommodation portion, the method for manufacturing the battery cell comprising the steps of:
aligning the battery cell;
pushing, by a squeezing unit, an electrolyte solution remaining in the terrace portion toward the accommodation portion; and
forming a main sealing portion having a first gap with the accommodation portion in the terrace portion,
wherein in the step of pushing the electrolyte solution, the squeezing unit pushes the electrolyte solution further inwards than a region of the terrace portion which will become the main sealing portion.

16. The method for manufacturing the battery cell according to claim 15, before the step of pushing the electrolyte solution,
further comprising the step of:
forming a pre-sealing portion having a second gap with the accommodation portion in the terrace portion,
wherein the second gap is larger than the first gap.

17. The method for manufacturing the battery cell according to claim 16,
wherein in the step of pushing the electrolyte solution, the squeezing unit moves from an initial position to a final position further inwards than the region which will become the main sealing portion.

18. The method for manufacturing the battery cell according to claim 17, wherein the initial position is a position on the pre-sealing portion.

19. The method for manufacturing the battery cell according to claim 17,
wherein the squeezing unit is adjacent to or contacts the accommodation portion when the squeezing unit is in the final position.
